# EUROPÄISCHE PATENTANMELDUNG

(11) **EP 4 838 710 A1**
(43) Veröffentlichungstag der Anmeldung: **11.11.2026**
(21) Anmeldenummer: 26175644.9
(22) Anmeldetag: 30.04.2026
(51) Int. Cl.: H01R 12/61, H01R 12/67

(54) **VERBINDUNGSSYSTEM ZUM VERBINDEN MIT EINEM FLACHKABEL UND ZUGEHÖRIGES SYSTEM**

(30) Priorität: 05.05.2025 DE 102025117149
(71) Anmelder: Lapp Engineering AG, 6330 Cham (CH)
(72) Erfinder: Sehic, Stevens, 89233 Neu-Ulm (DE); Strobel, Joachim, 72669 Unterensingen (DE); Denk, Alexander, 89407 Dillingen (DE)
(74) Vertreter: Schicker, Silvia

(57) **Zusammenfassung**

Es wird ein System zum Verbinden eines Verbindungssystems mit einem ersten Flachkabel mit mehreren Adern und/oder mit einem zweiten Flachkabel mit mehreren Adern bereitgestellt. Das System umfasst (a) das erste Flachkabel umfassend eine erste Anzahl von entlang einer Breitenrichtung des ersten Flachkabels angeordneten Adern mit jeweils einem ersten Leiterquerschnitt, wobei sämtliche Abstände zwischen Mittelachsen jeweils benachbarter Adern identisch sind. Das System umfasst ferner (b) das zweite Flachkabel umfassend eine zweite Anzahl von entlang einer Breitenrichtung des zweiten Flachkabels angeordneten Adern mit jeweils einem zweiten Leiterquerschnitt, wobei sämtliche Abstände zwischen Mittelachsen jeweils benachbarter Adern identisch sind und den Abständen des ersten Flachkabels entsprechen. Der erste Leiterquerschnitt und der zweite Leiterquerschnitt unterscheiden sich voneinander und/oder die erste Anzahl von Adern und die zweite Anzahl von Adern unterscheiden sich voneinander. Das System umfasst ferner (c) das Verbindungssystem. Das Verbindungssystem umfasst ein Gehäuse zum Aufnehmen des zu verbindenden Flachkabels, sodass das zu verbindende Flachkabel entlang einer ersten Richtung durch das Gehäuse verläuft. Das Verbindungssystem umfasst - mindestens drei Aufnahmen für jeweils einen Dorn zum Einstechen in jeweils eine der Adern des zu verbindenden Flachkabels. Die mindestens drei Aufnahmen sind so angeordnet, dass in einem aufgenommenen Zustand der Dorne die Dorne der mindestens drei Aufnahmen bezüglich der zur ersten Richtung senkrechten Breitenrichtung des zu verbindenden Flachkabels im gleichen Abstand zueinander angeordnet sind, der dem Abstand zwischen den Mittelachsen der Adern des ersten Flachkabels und des zweiten Flachkabels entspricht. Ferner wird ein entsprechendes Verbindungssystem bereitgestellt.

## Beschreibung

### Technisches Gebiet

Die Erfindung betrifft ein System zum Verbinden eines Verbindungssystems mit einem ersten Flachkabel mit mehreren Adern und/oder mit einem zweiten Flachkabel mit mehreren Adern. Ferner betrifft die Erfindung ein entsprechendes Verbindungssystem. Insbesondere betrifft die Erfindung ein Verbindungssystem, welches es ermöglicht, eine elektrische Verbindung mit einem Flachkabel herzustellen, ohne die elektrische Leitung durch das Flachkabel zu unterbrechen.

### Stand der Technik

Aus dem Stand der Technik sind Flachkabel-Anschlussdosen bzw. Flachkabel-Abzweigdosen bekannt, welche einen abisolierfreien Anschluss an ein Flachkabel ermöglichen. Ferner sind entsprechende Flachkabel mit mehreren Adern bekannt, mit denen die jeweilige Anschlussdose bzw. Abzweigdose verbunden und insbesondere elektrisch kontaktiert werden kann.

Das Dokument DE 10 2007 041 815 A1 offenbart eine entsprechende Vorrichtung zur abisolierfreien Herstellung eines Anschlusses an ein Flachkabel.

Bei Verbindungssystemen des Stands der Technik ist es derzeit erforderlich, dass für jeden Typ Flachkabel eine eigene Box bereitgestellt werden muss, um die unterschiedlichen Dimensionen des jeweiligen Flachkabels zu berücksichtigen und um für die entsprechende Anzahl an Adern entsprechende Kontakte bereitzustellen. Um das jeweilige Flachkabel sicher zu halten und sicher zu kontaktieren, darf möglichst kein Zwischenraum seitlich oder oberhalb bzw. unterhalb des Flachkabels bestehen. Somit muss für jede Dimensionierung (insbesondere für jede Dicke von Flachkabel und für jede Breite von Flachkabel) ein eigenes Verbindungssystem bereitgestellt werden, welches ein Flachkabel mit der entsprechenden Dicke und der entsprechenden Breite passgenau aufnehmen kann. Ferner müssen die Dornen zur elektrischen Kontaktierung der Adern des jeweiligen Flachkabels passgenau für den zu verbindenden Kabeltyp in dem Verbindungssystem angeordnet sein. Somit können bestehende Verbindungssysteme immer nur für einen Typ von Flachkabel oder für eine eingeschränkte Gruppe von Typen von Flachkabel genutzt werden, was ein Problem in der Flexibilität darstellt. Dies wird insbesondere auch dadurch erschwert, dass unterschiedliche Typen von Flachkabel des Stands der Technik (insbesondere Flachkabel mit einer unterschiedlichen Anzahl an Adern und/oder unterschiedlichen Leiterquerschnitten) zwischen ihren einzelnen Adern unterschiedliche Abstände aufweisen, sodass für jeden einzelnen Typen von Flachkabel ein eigenes Verbindungssystem bereitgestellt werden muss, welches an die jeweiligen Abstände zwischen den einzelnen Adern angepasst ist.

Diese Situation führt im Stand der Technik auch dazu, dass jedes Design eines Verbindungssystems eine eigenständige UL-Zertifizierung erforderlich macht, was zu zusätzlichen Kosten und zusätzlichem Aufwand führt.

### Zusammenfassung der Erfindung

Es ist eine Aufgabe der Erfindung, ein System zum Verbinden eines Verbindungssystems mit einem ersten Flachkabel mit mehreren Adern und/oder mit einem zweiten Flachkabel mit mehreren Adern bereitzustellen, das mindestens eines der oben geschilderten Probleme und/oder ein damit in Zusammenhang stehendes Problem löst. Insbesondere soll ein modulares Verbindungssystem bereitgestellt werden, welches einen Anschluss an unterschiedliche Typen von Flachkabel ermöglicht. Ferner ist es eine Aufgabe der Erfindung, ein Verbindungssystem bereitzustellen, das mindestens eines der oben geschilderten Probleme und/oder ein damit in Zusammenhang stehendes Problem löst.

Erfindungsgemäß wird die Aufgabe gemäß einem ersten Aspekt durch ein System zum Verbinden eines Verbindungssystems mit einem ersten Flachkabel mit mehreren Adern und/oder mit einem zweiten Flachkabel mit mehreren Adern gelöst. Das System umfasst (a) das erste Flachkabel umfassend eine erste Anzahl von entlang einer Breitenrichtung des ersten Flachkabels angeordneten Adern mit jeweils einem ersten Leiterquerschnitt, wobei sämtliche Abstände zwischen Mittelachsen jeweils benachbarter Adern identisch sind. Das System umfasst ferner (b) das zweite Flachkabel umfassend eine zweite Anzahl von entlang einer Breitenrichtung des zweiten Flachkabels angeordneten Adern mit jeweils einem zweiten Leiterquerschnitt, wobei sämtliche Abstände zwischen Mittelachsen jeweils benachbarter Adern identisch sind und den Abständen des ersten Flachkabels entsprechen. Der erste Leiterquerschnitt und der zweite Leiterquerschnitt unterscheiden sich voneinander und/oder die erste Anzahl von Adern und die zweite Anzahl von Adern unterscheiden sich voneinander. Das System umfasst ferner (c) das Verbindungssystem. Das Verbindungssystem umfasst ein Gehäuse zum Aufnehmen des zu verbindenden Flachkabels, sodass das zu verbindende Flachkabel entlang einer ersten Richtung durch das Gehäuse verläuft. Das Verbindungssystem umfasst - mindestens drei Aufnahmen für jeweils einen Dorn zum Einstechen in jeweils eine der Adern des zu verbindenden Flachkabels. Die mindestens drei Aufnahmen sind so angeordnet, dass in einem aufgenommenen Zustand der Dorne die Dorne der mindestens drei Aufnahmen bezüglich der zur ersten Richtung senkrechten Breitenrichtung des zu verbindenden Flachkabels im gleichen Abstand zueinander angeordnet sind, der dem Abstand zwischen den Mittelachsen der Adern des ersten Flachkabels und des zweiten Flachkabels entspricht.

Dadurch, dass sowohl das erste als auch das zweite Flachkabel dieselben Abstände zwischen den Mittelachsen der jeweils benachbarten Adern aufweisen, können mit dem Verbindungssystem (d. h. mit ein und demselben Verbindungssystem) unterschiedliche Typen von Flachkabel kontaktiert werden, insbesondere Flachkabel mit einer unterschiedlichen Anzahl an Adern und/oder mit einem unterschiedlichen Leiterquerschnitt. Dies wird dadurch ermöglicht, dass die Abstände zwischen den Dornen des Verbindungssystems den Abständen zwischen den Adern der unterschiedlichen Typen von Flachkabel entsprechen. Hierdurch ist ein flexibles Design des Verbindungssystems und des zugehörigen Flachkabels möglich. Wenn hierin "Abstände zwischen Adern" eines Kabels erwähnt werden, so sind immer die Abstände zwischen den Mittelachsen der jeweiligen Adern gemeint und nicht die Abstände der äußeren Oberflächen der jeweiligen Adern (außer dies ist explizit so gekennzeichnet).

Beispielhafte Typen von Flachkabel sind 5 G 2,5, 5 G 4, 5 G 6, 3 G 2,5, 3 G 4 und 3 G 6. Hierbei steht die erste Ziffer (d. h. im obigen Beispiel 5 bzw. 3) für die Anzahl der Adern, der Buchstabe G steht für das Vorhandensein eines grün-gelben Schutzleiters und die zweite Ziffer (d. h. im obigen Beispiel 2,5, 4 bzw. 6) für den Leiterquerschnitt in mm2. Die vorliegende Offenbarung ist jedoch nicht auf die oben genannten Typen von Flachkabel beschränkt. Eine Besonderheit der hierin beschriebenen Flachkabel besteht darin, dass bei den unterschiedlichen Typen von Flachkabel die Abstände zwischen jeweils benachbarten Adern identisch sind. Somit weisen Flachkabel mit einer geringeren Anzahl an Adern dieselben Abstände zwischen den Adern auf wie Flachkabel mit einer höheren Anzahl an Adern. Ferner weisen Flachkabel mit einem geringeren Leiterquerschnitt dieselben Abstände zwischen den Adern auf wie Flachkabel mit einem größeren Leiterquerschnitt. Die oben geschilderten Typen von Flachkabel beschreiben somit keine bekannten Flachkabel des Stands der Technik, sondern neue Typen von Flachkabel mit identischem Abstand zwischen den jeweils benachbarten Adern.

In manchen Ausführungsbeispielen können konventionelle Schraubbefestigungen und Schnellverschlüsse mit einer Basisvariante verwendet werden.

Manche Ausführungsbeispiele können für AC- und DC-Anwendungen geeignet sein.

Bei manchen Ausführungsbeispielen kann es ausreichen, einen einzigen Zertifizierungsprozess für das Verbindungssystem zu durchlaufen, welches mit mehreren Typen von Flachkabel verwendet werden kann (s. o.).

Das System umfasst das erste Flachkabel und das zweite Flachkabel, wobei jeweils eines dieser beiden Flachkabel mit dem Verbindungssystem verbunden werden kann. Dieses jeweilige Flachkabel (d. h., das erste Flachkabel oder das zweite Flachkabel) wird hierin auch als das zu verbindende Flachkabel bezeichnet. Insbesondere kann es möglich sein, mit demselben Verbindungssystem wahlweise das erste oder das zweite Flachkabel zu verbinden. In manchen Ausführungsformen kann es beispielsweise möglich sein, das Verbindungssystem zunächst mit dem ersten Flachkabel zu verbinden, es anschließend von dem ersten Flachkabel zu lösen um es mit dem zweiten Flachkabel zu verbinden. Die erste Anzahl von Adern kann beispielsweise 3 sein und die zweite Anzahl von Adern kann 5 sein. Letztendlich kann die Anzahl von Adern der jeweiligen Flachkabel beliebig gewählt werden. Ferner kann der erste Leiterquerschnitt 2,5 mm2 betragen und der zweite Leiterquerschnitt kann 4 mm2 oder 6 mm2 betragen. Letztendlich kann der Leiterquerschnitt der jeweiligen Flachkabel beliebig gewählt werden. Innerhalb des ersten Flachkabels und/oder des zweiten Flachkabels kann der Leiterquerschnitt sämtlicher Adern zueinander identisch sein. Wenn beispielsweise ein Leiterquerschnitt für das jeweilige Kabel angegeben ist (z. B. 2,5 mm2), so beschreibt dies den Leiterquerschnitt sämtlicher Adern des jeweiligen Kabels. Das erste Flachkabel und das zweite Flachkabel unterscheiden sich somit in der Anzahl an Adern und/oder im Leiterquerschnitt. Entscheidend ist jedoch, dass trotz unterschiedlicher Anzahl an Adern und/oder unterschiedlichem Leiterquerschnitt ein Abstand zwischen den einzelnen Adern bei beiden Kabeln derselbe ist.

Das Gehäuse des Verbindungssystems kann beispielsweise durch Verschraubung mit dem zu verbindenden Flachkabel verbindbar sein. Insbesondere kann das Gehäuse eine Hauptbox und eine Basisplatte umfassen. Die Hauptbox ist dazu eingerichtet, an einer oberen Seite des Flachkabels angeordnet zu werden und die Basisplatte ist dazu eingerichtet, an einer der oberen Seite des Flachkabels gegenüberliegenden unteren Seite des Flachkabels angeordnet zu werden. Zur Befestigung des Verbindungssystems am Flachkabel kann die Hauptbox mit der Basisplatte verschraubt werden und/oder es kann ein oder mehrere Schnappverschlüsse vorgesehen sein (sogenannter Schnellverschluss), um die Hauptbox mit der Basisplatte zu verbinden. Eine Verbindung zwischen Hauptbox und Basisplatte kann lösbar sein. Das Flachkabel wird zwischen Hauptbox und Basisplatte eingeklemmt. Wenn das Gehäuse mit dem Flachkabel wie oben beschrieben verbunden ist, wird dies im Folgenden als "verbundener Zustand" bezeichnet.

Das Verbindungssystem kann so ausgestaltet sein, dass es beim Verbinden mit dem Flachkabel eine akustische Rückmeldung abgibt. Dies kann im Fall des Schnappverschlusses beispielsweise durch ein Schnappgeräusch des Schnappverschlusses erfolgen. Somit kann einem Benutzer auf einfache Weise angezeigt werden, dass die Verbindung korrekt erfolgt ist. Ferner können zur Verbindung der Hauptbox mit der Basisplatte Spezialschrauben verwendet werden, die nur mit einem speziellen Werkzeug geöffnet werden können, also insbesondere keine handelsüblichen Schlitzschrauben, Kreuzschlitzschrauben. Somit kann gewährleistet werden, dass das Verbindungssystem nicht von jedem ohne Weiteres geöffnet werden kann (beispielsweise aus Sicherheitsgründen).

Die erste Richtung ist eine Erstreckungsrichtung der Adern des zu verbindenden Flachkabels im verbundenen Zustand. Das Gehäuse kann beispielsweise so ausgestaltet sein, dass es im Wesentlichen quaderförmig ist, wobei eine längste Seite des Quaders sich in die erste Richtung erstreckt.

Das erste und/oder das zweite Flachkabel kann beispielswiese einen Leiterquerschnitt von 2,5, 4 oder 6 mm2 aufweisen. Bei dem ersten und/oder dem zweiten Flachkabel kann es sich insbesondere jeweils um eines der folgenden Typen handeln: 5 G 2,5, 5 G 4, 5 G 6, 3 G 2,5, 3 G 4 und 3 G 6, jedoch nicht um denselben Typen.

Die Aufnahmen für die Dorne können beispielsweise jeweils ein Schraubgewinde zum Einschrauben des jeweiligen Dorns umfassen. Ferner kann eine gesonderte Schraube vorgesehen sein, welche beim Einschrauben den Dorn in eine jeweilige Ader des Flachkabels drückt. Die Aufnahme kann eine elektrische Verbindung des Dorns mit einer Ader eines Anschlusskabels ermöglichen. Das Anschlusskabel kann durch eine Öffnung des Gehäuses aus dem Gehäuse herausgeführt werden. Alternativ kann die Aufnahme eine elektrische Verbindung des Dorns mit einem Kabel ermöglichen, welches mit einer in einer Wand des Gehäuses vorgesehenen Anschlussbuchse verbunden ist. An die Anschlussbuchse kann ein Anschlusskabel verbunden werden, sodass eine elektrische Verbindung einer jeweiligen Ader des Anschlusskabels mit einer jeweiligen Ader des Flachkabels hergestellt und beibehalten werden kann.

Eine Penetration des Dorns in das Kabel (genauer gesagt, in den jeweiligen Leiter des Kabels) kann durch Einschrauben des Dorns im geschlossenen Zustand zwischen Basisplatte und Hauptbox oder während des Verbindens der Hauptbox mit der Basisplatte erfolgen.

Da das Bereitstellen des Anschlusskabels und dessen Verbindung mit einem oder mehreren Dornen bzw. Kontakten für die Fachperson bekannt ist, wird auf diese Aspekte im Folgenden nicht im Detail eingegangen.

Die Dorne können bereits mit den Aufnahmen verbunden sein.

Die Aufnahmen können in Form eines zusammenhängenden Aufnahmeelements oder in Form einzelner Aufnahmeelemente vorgesehen sein. Relevant ist hierbei lediglich, dass für jeden der Dorne eine Aufnahme vorgesehen ist, in welche der jeweilige Dorn aufgenommen werden kann. Eine mögliche strukturelle Verbindung der einzelnen Aufnahmen untereinander kann bestehen, muss jedoch nicht.

Der aufgenommene Zustand beschreibt einen Zustand, in dem alle Dorne in ihrer jeweiligen Aufnahme aufgenommen sind. Beispielsweise können sich die Dorne bereits in einem Ausgangszustand des Verbindungssystems (z. B. bereits bei Lieferung des Verbindungssystems) im aufgenommenen Zustand befinden. Alternativ können die Dorne erst durch einen Benutzer in die jeweilige Aufnahme eingefügt werden, beispielsweise durch Einschrauben.

Die zur ersten Richtung senkrechte Breitenrichtung des jeweiligen Flachkabels ist eine Richtung, in der die Breite des Flachkabels gemessen wird. Anders ausgedrückt, ist die Breitenrichtung eine Richtung, entlang der die einzelnen Adern des Flachkabels angeordnet sind. Dass die Dorne bezüglich der Breitenrichtung im gleichen Abstand zueinander angeordnet sind, bedeutet, dass die Komponenten der Abstandsvektoren zwischen in Breitenrichtung benachbarter Dornen in Richtung der Breitenrichtung jeweils identisch lang sind. Noch anders ausgedrückt, sind imaginäre Linien, welche durch die jeweiligen Dornen parallel zur ersten Richtung verlaufen, jeweils in gleichem Abstand voneinander entfernt. Auf diese Weise kann ein Flachkabel von den Dornen kontaktiert werden, dessen benachbarte Adern in gleichem Abstand voneinander entfernt sind. Die Aufnahmen sind so angeordnet, dass im aufgenommenen Zustand die Dornen sämtlicher Aufnahmen des Verbindungssystems bezüglich der Breitenrichtung im gleichen Abstand zueinander angeordnet sind. Entlang der ersten Richtung können die Aufnahmen beliebig über das Verbindungssystem verteilt sein.

Das Verbindungssystem kann mindestens fünf und insbesondere genau fünf Aufnahmen aufweisen, die so angeordnet sind, dass im aufgenommenen Zustand der Dorne die Dorne der mindestens fünf Aufnahmen bezüglich der Breitenrichtung des zu verbindenden Flachkabels im gleichen Abstand zueinander angeordnet sind.

Hierbei können insbesondere 5-adrige Flachkabel von dem Verbindungssystem kontaktiert werden. Es können jedoch auch mit demselben Verbindungssystem Flachkabel mit weniger als 5 Adern kontaktiert werden, deren Abstände zwischen benachbarten Adern gleich sind wie die Abstände zwischen den Adern der 5-adrigen Flachkabel.

Das Verbindungssystem kann ferner mindestens einen Abstandshalter zum Füllen eines Zwischenraums zwischen dem zu verbindenden Flachkabel und dem Gehäuse umfassen.

Dadurch, dass ein Abstandshalter vorgesehen ist, kann dieser an einen spezifischen Typen von Flachkabel angepasst sein, sodass dieser Typ Flachkabel mit dem Verbindungssystem verwendet werden kann. Wenn der Abstandshalter weggelassen wird, kann ein anderer Typ Flachkabel (d. h., ein Flachkabel mit anderen Abmessungen, also andere Breite und/oder andere Dicke) mit demselben Verbindungssystem verwendet werden. Ferner können für unterschiedliche Typen von Flachkabel unterschiedliche Abstandshalter vorgesehen sein. Wenn die Abstandshalter mit dem Gehäuse lösbar verbunden sind, so können diese für unterschiedliche Typen von Flachkabel ausgewechselt werden.

Der Abstandshalter kann eine zusätzliche mechanische Kodierung enthalten, insbesondere zur Herstellung von Exklusivität für einen jeweiligen Kunden.

Der Abstandhalter kann aus einem elektrisch isolierenden Material bestehen. Der Abstandshalter kann aus einem flexiblen Material bestehen. Der Abstandhalter kann dazu ausgebildet sein, den Zwischenraum in zumindest eine Dimension vollständig auszufällen. Das heißt: Wenn der Abstandshalter "neben" dem Flachkabel, also in Breitenrichtung des Flachkabels benachbart zum Flachkabel vorgesehen ist, kann ein Abstand in Breitenrichtung zwischen Flachkabel und Gehäuse insofern vollständig gefüllt sein, dass der Abstandhalter sich in Breitenrichtung vom Flachkabel bis zum Gehäuse erstreckt. Wenn zusätzlich oder alternativ der Abstandshalter "über" oder "unter" dem Flachkabel, also in Dickenrichtung des Flachkabels benachbart zum Flachkabel vorgesehen ist, kann ein Abstand in Dickenrichtung zwischen Flachkabel und Gehäuse insofern vollständig gefüllt sein, dass der Abstandhalter sich in Dickenrichtung vom Flachkabel bis zum Gehäuse erstreckt. Das Flachkabel kann somit vom Gehäuse und vom Abstandshalter eingeklemmt werden. Insbesondere kann das Flachkabel zwischen Gehäuse und Abstandshalter eingeklemmt werden.

Der Abstandhalter kann beispielsweise nicht einstückig mit dem Gehäuse verbunden sein. Insbesondere kann der Abstandshalter lösbar mit dem Gehäuse verbindbar sein. Der Abstandshalter kann somit eine eigenständige, an das Gehäuse anbringbare und ggf. von dem Gehäuse wieder entfernbare Komponente darstellen.

Das Verbindungssystem kann ferner mindestens ein Befestigungsmittel zum Befestigen des Abstandhalters an dem Gehäuse umfassen. Das Befestigungsmittel kann insbesondere eine lösbare Befestigung des Abstandshalters am Gehäuse ermöglichen. Das Befestigungsmittel kann am Abstandshalter und/oder am Gehäuse vorgesehen sein.

Das mindestens eine Befestigungsmittel kann eine Schraube umfassen. Im Abstandhalter und im Gehäuse kann jeweils mindestens ein Loch zum Eindrehen der Schraube vorgesehen sein. Mindestens eines der Löcher kann ein Gewinde aufweisen. Somit kann der Abstandshalter an das Gehäuse festgeschraubt werden.

Das mindestens eine Befestigungsmittel kann einen Befestigungsclip umfassen. Der Befestigungsclip kann einstückig mit dem Element ausgestaltet sein, an dem es vorgesehen ist, d. h. insbesondere mit dem Abstandshalter oder mit dem Gehäuse.

Der Befestigungsclip kann am Abstandshalter vorgesehen sein und dazu eingerichtet sein, in eine dazu vorgesehene Öffnung des Gehäuses eingeführt zu werden und darin einzurasten. Alternativ kann der Befestigungsclip am Gehäuse vorgesehen sein und dazu eingerichtet sein, in eine dazu vorgesehene Öffnung des Abstandshalters eingeführt zu werden und darin einzurasten. Der Befestigungsclip kann jeweils eine Rastnase aufweisen zum Einrasten in der zugehörigen Öffnung.

Der Abstandhalter kann dazu eingerichtet sein, in einem eingesetzten Zustand einen Zwischenraum zu füllen, der sich entlang einer Breitenrichtung des zu verbindenden Flachkabels benachbart zum Flachkabel befindet. Die Breitenrichtung ist hierin definiert als die Richtung, in der die Breite des Flachkabels gemessen wird, anders ausgedrückt, als die Richtung, in der die Adern des Flachkabels nebeneinander angeordnet sind. Die Breitenrichtung ist senkrecht zur ersten Richtung, also senkrecht zur Erstreckungsrichtung der Adern des Flachkabels.

Der Abstandhalter kann dazu eingerichtet sein, in einem eingesetzten Zustand einen Zwischenraum zu füllen, der sich entlang einer Dickenrichtung des zu verbindenden Flachkabels benachbart zum Flachkabel befindet. Die Dickenrichtung ist hierin definiert als die Richtung, in der die Dicke des Flachkabels gemessen wird. Die Dickenrichtung ist senkrecht zur ersten Richtung, also senkrecht zur Erstreckungsrichtung der Adern des Flachkabels, und senkrecht zur Breitenrichtung. Somit spannen die erste Richtung (Erstreckungsrichtung), die Breitenrichtung und die Dickenrichtung ein kartesisches Koordinatensystem auf.

Der Abstandhalter kann dazu eingerichtet sein, sich in einem eingesetzten Zustand in Breitenrichtung des zu verbindenden Flachkabels mindestens über das gesamte Flachkabel zu erstrecken. Anders ausgedrückt kann der Abstandshalter mindestens genauso breit sein wie das zugehörige Flachkabel.

Der Abstandhalter kann dazu eingerichtet sein, sich in einem eingesetzten Zustand in Dickenrichtung des zu verbindenden Flachkabels mindestens über das gesamte Flachkabel zu erstrecken. Anders ausgedrückt kann der Abstandshalter mindestens genauso dick sein wie das zugehörige Flachkabel.

Das Verbindungssystem kann mehrere Abstandhalter für unterschiedlich breite und/oder unterschiedlich dicke Flachkabel umfassen. Insbesondere kann das Verbindungssystem mehrere unterschiedlich dimensionierte Abstandshalter umfassen. Die mehreren Abstandshalter können für unterschiedliche Typen von Flachkabel jeweils die oben geschilderten Voraussetzungen hinsichtlich ihrer Dimensionierung erfüllen. Anders ausgedrückt kann für unterschiedliche Typen von Flachkabel (insbesondere für unterschiedliche Dicken und/oder unterschiedliche Breiten) jeweils ein passender Abstandshalter vorgesehen sein. Es können somit Abstandshalter mit unterschiedlichen Dicken und/oder mit unterschiedlichen Breiten vorgesehen sein.

Der Abstandhalter kann in einem eingesetzten Zustand an einer Position mindestens einer der Aufnahmen eine Aussparung umfassen. Die Aussparung kann dazu eingerichtet sein, den jeweiligen Dorn aufzunehmen, wenn dieser eingedreht wird. Anders ausgedrückt, kann die Aussparung im Abstandhalter dazu führen, dass der jeweilige Dorn den Abstandshalter nicht kontaktiert oder zumindest nicht tief in diesen eindringt. Sollte somit einer der Dorne, welche sich für das jeweilige Flachkabel nicht benachbart zum Flachkabel (d. h., oberhalb des Flachkabels) sondern benachbart zum Abstandshalter befinden, aus Versehen oder absichtlich eingedreht werden, so kann durch die Aussparung im Abstandhalter sichergestellt werden, dass der jeweilige Dorn und/oder der Abstandshalter nicht beschädigt werden.

Das Verbindungssystem kann ferner eine zwischen dem Gehäuse und dem Flachkabel angeordnete Dichtung mit einem ringförmigen Dichtungsteil umfassen. Der ringförmige Dichtungsteil kann beispielsweise in Aufsicht rechteckig mit abgerundeten Ecken sein. Ringförmig heißt in diesem Zusammenhang, dass der Dichtungsteil einen geschlossenen Ring bildet. Dieser muss nicht kreisförmig sein, sondern kann insbesondere rechteckig oder rechteckig mit abgerundeten Ecken sein. Die Dichtung kann am Gehäuse befestigt sein, insbesondere mit dem Gehäuse verklebt sein. Die Dichtung kann an einer Oberseite bzw. einer Hauptbox des Gehäuses befestigt sein, anders ausgedrückt, an einer Komponente des Gehäuses, von welcher aus der mindestens eine Dorn in das Flachkabel eingestochen wird.

Die Dichtung kann zusätzlich zu dem ringförmigen Dichtungsteil einen Dichtungsteil umfassen, welcher entlang einer Kontaktfläche zwischen dem Flachkabel und dem Abstandhalter verläuft. Dieser zusätzliche Dichtungsteil kann somit einen Spalt zwischen Flachkabel und Abstandshalter abdecken.

Das Verbindungssystem kann den Dorn umfassen. Dieser kann unlösbar oder lösbar mit der Aufnahme für den Dorn verbunden sein.

Erfindungsgemäß wird die Aufgabe gemäß einem zweiten Aspekt durch ein Verbindungssystem zum Verbinden mit einem ersten Flachkabel mit mehreren Adern mit einem zweiten Flachkabel mit mehreren Adern gelöst. Das Verbindungssystem umfasst ein Gehäuse zum Aufnehmen des zu verbindenden Flachkabels, sodass das zu verbindende Flachkabel entlang einer ersten Richtung durch das Gehäuse verläuft. Das Verbindungssystem umfasst ferner mindestens drei Aufnahmen für jeweils einen Dorn zum Einstechen in jeweils eine der Adern des zu verbindenden Flachkabels. Die mindestens drei Aufnahmen sind so angeordnet, dass in einem aufgenommenen Zustand der Dorne die Dorne der mindestens drei Aufnahmen bezüglich der zur ersten Richtung senkrechten Breitenrichtung des zu verbindenden Flachkabels im gleichen Abstand zueinander angeordnet sind. Das Verbindungssystem umfasst ferner mindestens einen Abstandshalter zum Füllen eines Zwischenraums zwischen dem zu verbindenden Flachkabel und dem Gehäuse.

Sämtliche der Details des Verbindungssystems, welches oben als Bestandteil des Systems gemäß dem ersten Aspekt beschrieben wurde, können auf das Verbindungssystem des zweiten Aspekts entsprechend zutreffen.

### Kurze Beschreibung der Zeichnungen

Nachfolgend werden Ausführungsbeispiele der Erfindung anhand der Zeichnungen näher beschrieben.
Figur 1 zeigt eine perspektivische Ansicht eines geöffneten Verbindungssystems gemäß der vorliegenden Offenbarung.
Figur 2 zeigt das Verbindungssystem der Figur 1 in einem geschlossenen und verbundenen Zustand.
Figur 3 zeigt Querschnitte von unterschiedlichen Typen von Flachbandkabeln gemäß der vorliegenden Offenbarung und deren Abmessungen.
Figur 4 zeigt Querschnitte unterschiedlicher Typen von Flachbandkabel gemäß der vorliegenden Offenbarung, wobei in der mittleren Spalte der Figur zugehörige Abstandshalter dargestellt sind und in der rechten Spalte der Figur eingestochene Dorne dargestellt sind.
Figur 5 zeigt eine perspektivische Schnittdarstellung eines Verbindungssystems gemäß der vorliegenden Offenbarung.
Figur 6 zeigt Aufsichten unterschiedlicher Abstandshalter und zeigt Befestigungsmittel für Abstandshalter.
Figur 7 zeigt Aufsichten unterschiedlicher Flachkabel gemäß der vorliegenden Offenbarung und unterschiedlicher Abstandshalter und unterschiedlicher Arten von Dichtung für diese Elemente.
Figur 8 zeigt eine perspektivische Außenansicht eines Verbindungssystems gemäß der vorliegenden Offenbarung mit Schnappverschluss.

### Detaillierte Beschreibung

Im Folgenden werden räumliche Beziehungen, beispielsweise oben, unten, innen, außen, etc., verwendet, um die Ausführungsbeispiele anschaulich zu beschreiben. Der Fachmann versteht, dass das der anschaulichen Beschreibung dient und nicht als Beschränkung zu verstehen ist.

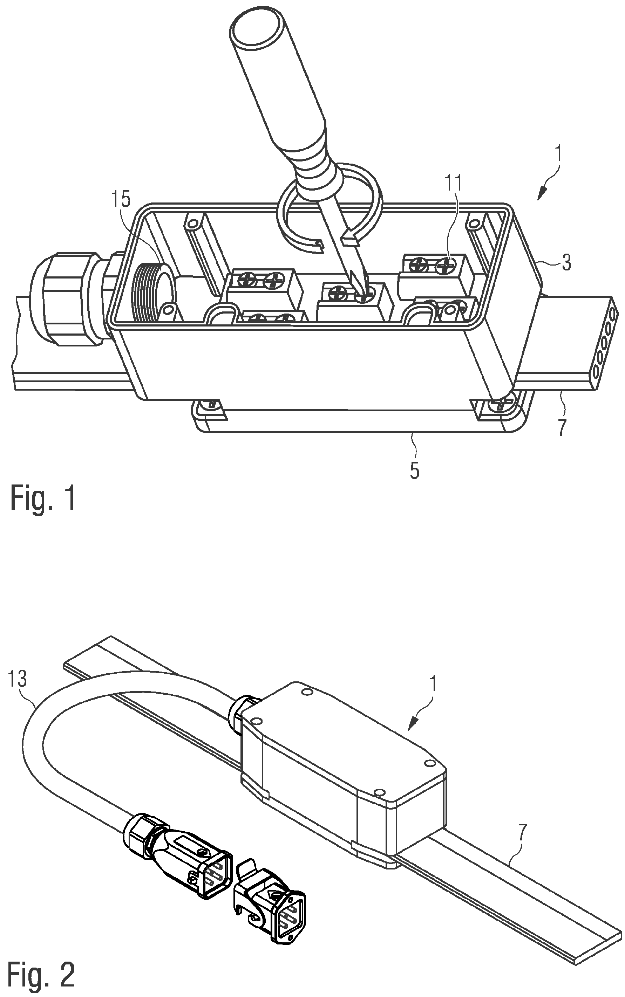

Figur 1 zeigt eine perspektivische Ansicht eines geöffneten Verbindungssystems gemäß der vorliegenden Offenbarung.

Das Verbindungssystem umfasst ein Gehäuse 1, welches sich aus einer Hauptbox 3 und einer Basisplatte 5 zusammensetzt. Zwischen Hauptbox 3 und Basisplatte 5 wird das Flachkabel 7 geklemmt, mit welchem ein elektrischer Kontakt hergestellt werden soll (das zu verbindende Flachkabel). Das Verbinden des Verbindungssystems mit dem Flachkabel 7 kann beispielsweise mittels Schrauben erfolgen, wobei die Basisplatte 5 mit der Hauptbox 3 verschraubt wird, um das Flachkabel 7 dazwischen einzuklemmen.

Zum Herstellen des elektrischen Kontakts, d. h. zum Kontaktieren der einzelnen Adern des Flachkabels 7 weist das Verbindungssystem innerhalb der Hauptbox 3 mehrere Aufnahmen 11 für Dornen auf. Der Einfachheit halber ist exemplarisch nur eine der Aufnahmen 11 mit einem Bezugszeichen versehen. Die Dornen sind dazu eingerichtet, sich durch eine Isolation des Flachkabels 7 bis zum jeweiligen Leiter zu bohren und somit einen elektrischen Kontakt herzustellen. Die Aufnahmen 11 können beispielsweise jeweils den Dorn umfassen und eine Schraube, die beim Betätigen der Schraube den Dorn in die jeweilige Ader des Flachkabels 7 drückt. Alternativ können die Aufnahmen 11 jeweils einen Dorn umfassen, der ein Gewinde aufweist und wie eine Schraube in die jeweilige Ader des Flachkabels 7 gedreht werden kann.

Wie in Fig. 1 dargestellt, ist für jede der zu kontaktierenden Adern (im dargestellten Beispiel: fünf) eine zugehörige Aufnahme 11 vorgesehen. Die einzelnen Aufnahmen 11 sind in Breitenrichtung des Flachkabels 7 so zueinander versetzt angeordnet, dass sich jeweils je ein Dorn über einer zugehörigen Ader des Flachkabels 7 befindet. Die jeweiligen Aufnahmen 11 sind jeweils mit einer zugehörigen Ader eines Anschlusskabels 13 verbunden oder verbindbar (in Fig. 1 nicht dargestellt). Es kann somit pro Aufnahme 11 eine geeignete Klemme zum Anschluss einer Ader eines Anschlusskabels 13 vorgesehen sein. Das Anschlusskabel 13 kann durch eine Öffnung 15 aus dem Gehäuse 1 herausgeführt werden.

Ferner ist in Fig. 1 bereits erkennbar, dass benachbarte Adern des Flachkabels 7 jeweils denselben Abstand zueinander aufweisen. Dasselbe gilt für die Dornen der Aufnahmen 11 bezüglich der Breitenrichtung des Flachkabels 7. Bezüglich der Breitenrichtung des Flachkabels 7 sind die Aufnahmen 11 so am Gehäuse 1 positioniert, dass die Dorne jeweils im gleichen Abstand zueinander angeordnet sind, wenn sie von der jeweiligen Aufnahme 11 aufgenommen wurden (im aufgenommenen Zustand). Auf diese Weise kann das Flachkabel 7 von den zugehörigen Dornen elektrisch kontaktiert werden. Ferner kann auf diese Weise ein anderes Flachkabel (in Fig. 1 nicht dargestellt) elektrisch kontaktiert werden, welches eine geringere Anzahl von Adern aufweist (z. B. 3), deren Abstände zueinander jedoch identisch sind wie die Abstände zwischen den Adern des dargestellten Flachkabels 7. Alternativ oder zusätzlich kann ein anderes Flachkabel elektrisch kontaktiert werden, welches einen anderen Leiterquerschnitt aufweiset als das dargestellte Flachkabel 7, dessen Abstände zwischen den Adern jedoch dieselben sind wie die des dargestellten Flachkabels 7.

Fig. 2 zeigt eine Darstellung des Verbindungssystems der Fig. 1 in einem geschlossenen Zustand (d. h. die Hauptbox 3 ist geschlossen) und mit zugehörigem Anschlusskabel 13. Über das Anschlusskabel 13 kann im verbundenen Zustand das Flachkabel 7 elektrisch kontaktiert werden. Dies ist insbesondere ohne Unterbrechung der Leitfähigkeit durch das Flachkabel 7 möglich und ohne vorherige Abisolierung des Flachkabels.

Die Figuren 1 und 2 zeigen ferner, dass sich das Flachkabel 7 entlang einer ersten Richtung durch das Gehäuse 1 erstreckt. Diese erste Richtung ist eine Erstreckungsrichtung der Adern des Flachkabels 7. Senkrecht zur ersten Richtung kann eine Breitenrichtung definiert werden, als Richtung, in die die "Breite" des Flachkabels 7 gemessen würde. Entlang der Breitenrichtung sind die einzelnen Adern nebeneinander angeordnet. Senkrecht zur ersten Richtung und senkrecht zur Breitenrichtung kann die Dickenrichtung definiert werden, als Richtung entlang der die "Dicke" des Flachkabels 7 gemessen würde.

Das Verbindungssystem der vorliegenden Offenbarung kann zusätzlich zu den oben geschilderten Elementen eines Verbindungssystems mindestens einen Abstandshalter aufweisen. Ferner können am Verbindungssystem und/oder am Abstandshalter entsprechende Befestigungsmittel zur Befestigung des Abstandshalters am Gehäuse 1 des Verbindungssystems vorgesehen sein.

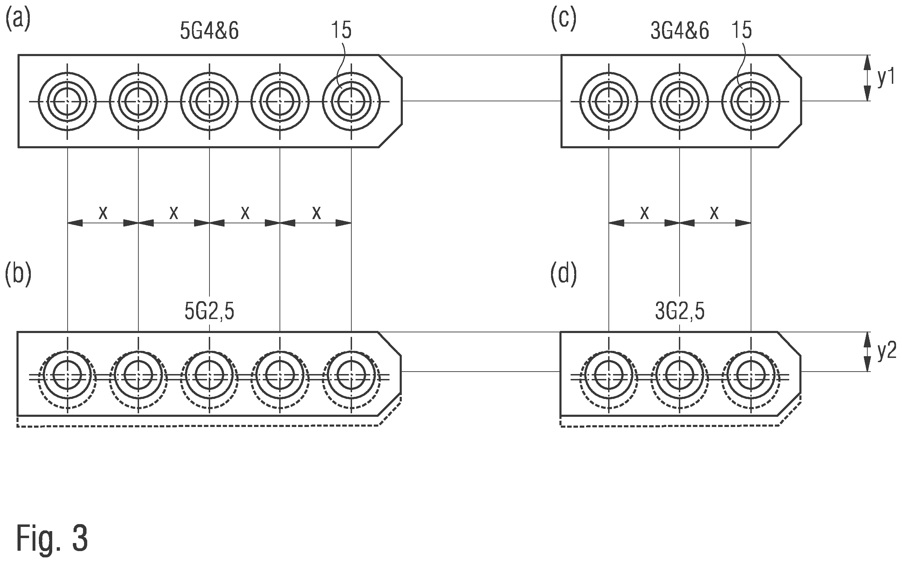

Fig. 3 zeigt Querschnitte unterschiedlicher Typen von Flachbandkabel 7 gemäß der vorliegenden Offenbarung. Die Typen von Flachbandkabel 7 sind nach einer harmonisierten Kennzeichnung gekennzeichnet, wobei die erste Ziffer für die Anzahl der Adern, der Buchstabe G für das Vorhandensein eines grün-gelben Schutzleiters und die zweite Ziffer für den Leiterquerschnitt in mm2 steht.

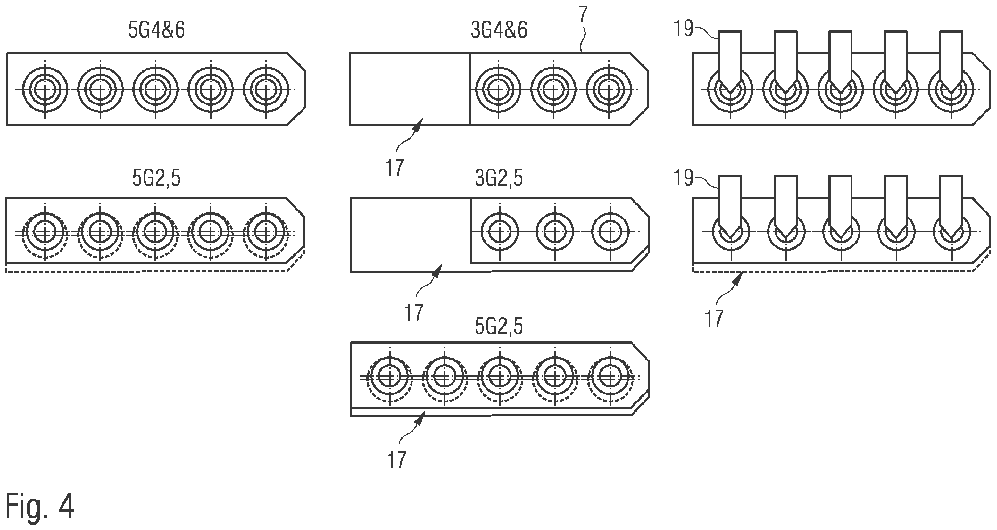

In der Darstellung der Fig. 3 (sowie der Fig. 4) entspricht die horizontale Richtung der Breitenrichtung, die vertikale Richtung der Dickenrichtung und die Richtung in die Zeichenebene hinein der ersten Richtung.

In Abschnitt (a) der Fig. 3 ist ein Flachkabel des Typs 5 G 4 bzw. 5 G 6 dargestellt. Im Folgenden und in den Figuren werden die Leerzeichen in der Kennzeichnung teilweise weggelassen. Wie oben geschildert, weist der Typ 5G4 fünf Adern auf, deren Leiterquerschnitt jeweils 4 mm2 beträgt.

In Abschnitt (b) ist ein Kabel des Typs 5G2,5 dargestellt, in Abschnitt (c) ein Kabel des Typs 3G4 bzw. 3G6 und in Abschnitt (d) ein Kabel des Typs 3G2,5.

Wenn hierin die jeweiligen Typen von Flachkabel genannt werden, sind die Flachkabel gemeint, so wie sie in Fig. 3 dargestellt und im Folgenden beschrieben sind. Insbesondere sind Flachkabel gemeint, die einen konstanten Abstand x zwischen benachbarten Adern aufweisen und bei denen dieser Abstand x zwischen den Adern bei Flachkabeln mit unterschiedlicher Anzahl von Adern beibehalten wird und bei Flachkabeln mit unterschiedlichem Leiterquerschnitt beibehalten wird. Der Abstand x zwischen benachbarten Adern ist - genauer gesagt - ein Abstand zwischen den Mittelachsen der jeweiligen Adern, d. h. in der Schnittdarstellung der Fig. 3 ein Abstand zwischen den Mittelpunkten der Adern.

Die Kabel der Typen 5G4/5G6 und 3G4/3G6 sind jeweils in einem Abschnitt gemeinsam dargestellt, da die jeweiligen Flachbandkabel keine unterschiedlichen Außenabmessungen aufweisen. Vielmehr wird der unterschiedliche Leiterquerschnitt bei den Kabeln mit geringerem Leiterdurchmesser (also der Kabel mit Leiterquerschnitt 4 mm2) durch eine dickere Isolierung der jeweiligen Ader kompensiert. Dies wird in den Abschnitten (a) und (c) der Fig. 3 durch den Ring 15 dargestellt. Bei den Kabeln 5G6 und 3G6 ist dieser Ring 15 Bestandteil des Leiters, während er bei den Kabeln 5G4 und 3G4 Bestandteil der Isolierung ist.

Somit unterscheiden sich die Kabel 5G4 und 5G6 nicht in ihren Außenabmessungen. Auch die Kabel 3G4 und 3G6 unterscheiden sich nicht in ihren Außenabmessungen. Wenn im Folgenden das Kabel 5G4/5G6 erwähnt wird, so handelt es sich um eines der Kabel 5G4 oder 5G6, deren äußeren Abmessungen identisch sind. Wenn im Folgenden das Kabel 3G4/3G6 erwähnt wird, so handelt es sich um eines der Kabel 3G4 oder 3G6, deren äußeren Abmessungen identisch sind.

Die einzelnen Adern (genauer: die Mittelachsen der jeweiligen Leiter) sind jeweils in einem Abstand x voneinander angeordnet. Dieser Abstand x ist innerhalb des jeweiligen Typs von Flachkabel zwischen den benachbarten Adern identisch.

Ferner ist dieser Abstand x bei den Kabeln mit Leiterquerschnitt 2,5 mm2, 4 mm2 und 6 mm2 identisch, wie ein Vergleich der Abschnitte (a) bis (d) der Fig. 3 zeigt. Somit ist auch eine Breite der Kabel 5G2,5, 5G4 und 5G6 mit identischer Anzahl von Adern identisch, siehe die Abschnitte (a) und (b) der Fig. 3. Dasselbe gilt für die Breite der Kabel 3G2,5, 3G4 und 3G6 (siehe Abschnitte (c) und (d) der Fig. 3).

Jedoch sind Kabel mit unterschiedlicher Anzahl an Adern unterschiedlich breit, wie ein Vergleich zwischen den linken Abschnitten (a), (b) und den rechten Abschnitten (c), (d) der Fig. 3 zeigt. Je mehr Adern das Flachkabel aufweist, umso breiter ist es. Der Abstand x zwischen den jeweils benachbarten Adern ist jedoch bei den Typen von Flachkabel mit unterschiedlicher Anzahl von Adern identisch.

Die Dicke der Kabel mit Leitungsquerschnitt 2,5 mm2 unterscheidet sich von der Dicke der Kabel mit Leitungsquerschnitt 4 mm2 bzw. 6 mm2. Dies wird in den Abschnitten (b) und (d) der Fig. 3 durch die gestrichelten Linien angedeutet, welche jeweils die Umrisse des dazugehörigen Flachkabels mit größerem Leitungsquerschnitt (also 4 mm2 bzw. 6 mm2) darstellen.

Insbesondere lässt sich aus der Fig. 3 erkennen, dass ein Abstand vom Mittelpunkt eines Leiters zur Oberfläche des Flachkabels (entlang der Dickenrichtung) zwischen den Kabeln mit Querschnitt 2,5 mm2 und den Kabeln mit Querschnitt 4 mm2 bzw. 6 mm2 variiert. Dieser Abstand y1 ist bei den Kabeln mit größerem Leitungsquerschnitt (4 mm2 bzw. 6 mm2) größer als ein entsprechender Abstand y2 bei den Kabeln mit kleinerem Leitungsquerschnitt (2,5 mm2).

Bei Verbindungssystemen des Stands der Technik musste für jeden einzelnen Typen von Flachkabel ein eigenes für den jeweiligen Typ angepasstes Verbindungssystem mit passendem Gehäuse bereitgestellt werden. Diese Problematik kann gemäß der vorliegenden Offenbarung insbesondere durch das Vorsehen mindestens eines passenden Abstandshalters gelöst werden, wie im Folgenden insbesondere unter Bezugnahme auf Fig. 4 erläutert wird.

In der linken Spalte der Fig. 4 sind noch einmal die beiden Typen von Flachbandkabel 5G4/5G6 und 5G2,5 übereinander dargestellt. In der mittleren Spalte sind (von oben nach unten) Flachbandkabel des Typs 3G4/3G6, 3G2,5 und 5G2,5 dargestellt. In der mittleren Spalte weisen die jeweiligen Flachbandkabel einen zugehörigen Abstandshalter 17 auf. Der Abstandshalter 17 ist so ausgestaltet, dass er gemeinsam mit dem jeweiligen Flachkabel 7 die äußeren Abmessungen des Kabels 5G4/5G6 aufweist.

Der Querschnitt des Flachkabels 5G4/5G6 stellt somit einen Referenz-Querschnitt dar, für den das Gehäuse 1 ausgelegt ist. Für die anderen Typen von Flachbandkabel, insbesondere die in der mittleren Spalte der Fig. 4 dargestellten Typen 3G4/3G6, 3G2,5 und 5G2,5 sind entsprechende Abstandhalter 17 vorgesehen.

Das in der mittleren Spalte oben dargestellte Flachkabel 3G4/3G6 weist dieselbe Dicke auf wie das Flachkabel 5G4/5G6, hat jedoch eine geringere Breite. Somit benötigt dieses Kabel einen im Querschnitt rechteckigen Abstandshalter 17, welcher entlang der Breitenrichtung des Flachkabels 7 (d. h. entlang der horizontalen Richtung in Fig. 4) benachbart zum Flachkabel 7 im Gehäuse 1 angeordnet wird. Dieser Abstandshalter 17 ist dazu eingerichtet, in einem eingesetzten Zustand (d. h. in einem Zustand, in dem der Abstandshalter 17 in das Gehäuse 1 eingesetzt ist) einen Zwischenraum zu füllen, der sich entlang der Breitenrichtung des Flachkabels 7 benachbart zum Flachkabel 7 befindet (also zwischen Flachkabel 7 und Gehäuse 1).

Das in der mittleren Spalte mittig dargestellte Flachkabel 3G2,5 weist eine geringere Dicke auf als das Flachkabel 5G4/5G6 und hat eine geringere Breite. Somit benötigt dieses Kabel einen im Querschnitt im Wesentlichen L-förmigen Abstandshalter 17, welcher entlang der Breitenrichtung des Flachkabels 7 (d. h. entlang der horizontalen Richtung in Fig. 4) benachbart zum Flachkabel 7 und entlang der Dickenrichtung des Flachkabels 7 (d. h. entlang der vertikalen Richtung in Fig. 4) benachbart zum Flachkabel 7 im Gehäuse 1 angeordnet wird. Dieser Abstandshalter 17 ist dazu eingerichtet, in einem eingesetzten Zustand (d. h. in einem Zustand, in dem der Abstandshalter 17 in das Gehäuse 1 eingesetzt ist) einen Zwischenraum zu füllen, der sich entlang der Breitenrichtung des Flachkabels 7 benachbart zum Flachkabel 7 befindet (also zwischen Flachkabel 7 und Gehäuse 1) und einen Zwischenraum zu füllen, der sich entlang der Dickenrichtung des Flachkabels 7 benachbart zum Flachkabel 7 befindet (also zwischen Flachkabel 7 und Gehäuse 1).

Das in der mittleren Spalte unten dargestellte Flachkabel 5G2,5 weist eine geringere Dicke auf als das Flachkabel 5G4/5G6, hat jedoch dieselbe Breite. Somit benötigt dieses Kabel einen im Querschnitt im Wesentlichen rechteckigen Abstandshalter 17 (der in Fig. 4 dargestellte abgeschrägte Abschnitt ist optional), welcher entlang der Dickenrichtung des Flachkabels 7 (d. h. entlang der vertikalen Richtung in Fig. 4) benachbart zum Flachkabel 7 im Gehäuse 1 angeordnet wird. Dieser Abstandshalter 17 ist dazu eingerichtet, in einem eingesetzten Zustand (d. h. in einem Zustand, in dem der Abstandshalter 17 in das Gehäuse 1 eingesetzt ist) einen Zwischenraum zu füllen, der sich entlang der Dickenrichtung des Flachkabels 7 benachbart zum Flachkabel 7 befindet (also zwischen Flachkabel 7 und Gehäuse 1).

In der rechten Spalte der Fig. 4 ist oben das Flachkabel 5G4/5G6 in einem kontaktierten Zustand dargestellt und in der rechten Spalte unten ist das Flachkabel 5G2,5 in einem kontaktierten Zustand dargestellt. Im kontaktierten Zustand sind Dorne 19 in die jeweiligen Leiter der Adern des Flachkabels 7 (im dargestellten Beispiel: fünf Dorne 19 in fünf Leiter) eingestochen und stellen somit einen elektrischen Kontakt her. Wie in Fig. 4, rechte Spalte dargestellt ist, können aufgrund des Abstandshalters 17 dieselben Dorne 19 mit denselben Aufnahmen 11 verwendet werden, um einen zuverlässigen elektrischen Kontakt zwischen dem jeweiligen Dorn 19 und dem jeweiligen Leiter herzustellen.

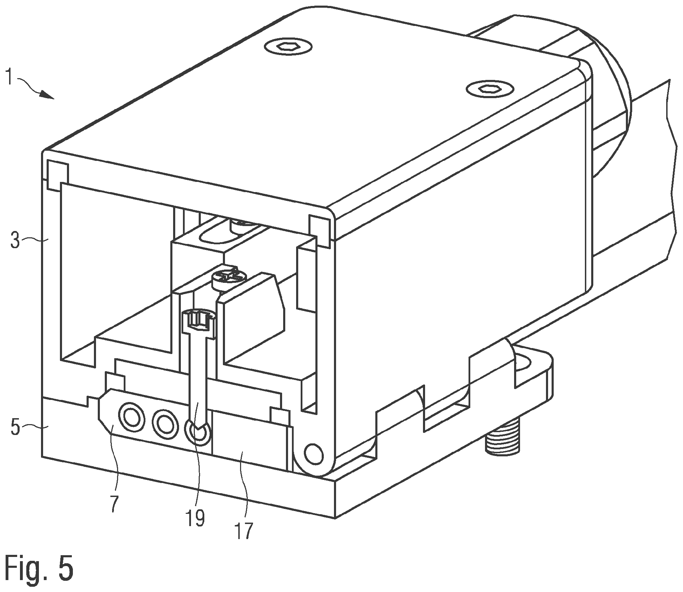

Figur 5 zeigt eine perspektivische Schnittdarstellung eines Verbindungssystems gemäß der vorliegenden Offenbarung. Das dargestellte Verbindungssystem umfasst ein Gehäuse 1 mit Hauptbox 3 und Basisplatte 5, wie in den Figuren 1 und 2 dargestellt und oben beschrieben. Das dargestellte Verbindungssystem befindet sich in einem verbundenen Zustand, in dem das Gehäuse 1 des Verbindungssystems mit einem Flachkabel 7 verbunden ist. Ferner befindet sich das Verbindungssystem in einem kontaktierten Zustand, in dem die Dorne 19 des Verbindungssystems in die jeweiligen Leiter des Flachkabels 7 eingestochen sind.

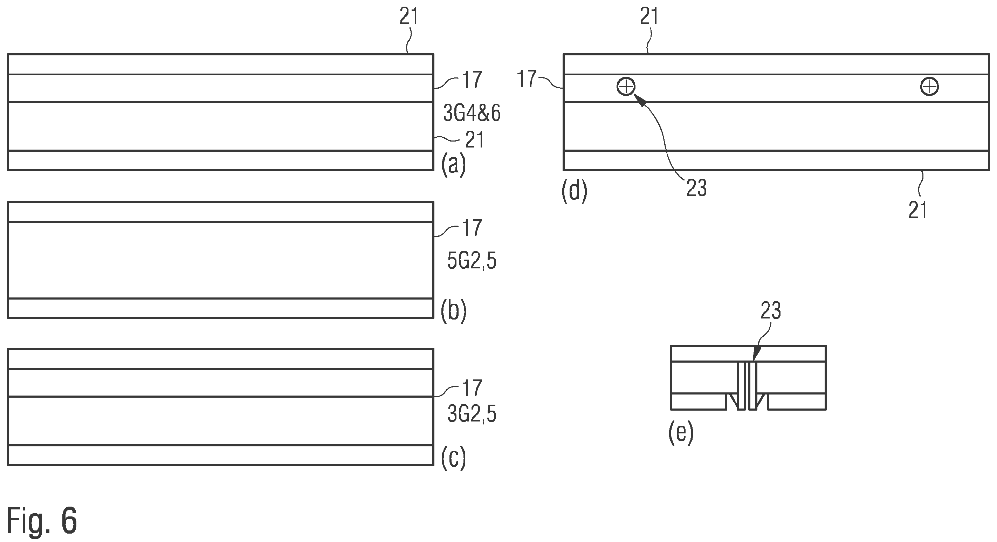

Das in Fig. 5 beispielhaft dargestellte Flachkabel 7 ist vom Typ 3G4 oder 3G6, sodass ein seitlicher Abstandhalter 17 vorgesehen ist, wie in Fig. 4, mittlere Spalte, oben dargestellt ist. Der Abstandshalter 17 befindet sich in einem eingesetzten Zustand, in dem er in das Gehäuse 1 eingesetzt wurde. Optional können hierfür entsprechende Befestigungsmittel vorgesehen sein, wie im Zusammenhang mit Fig. 6 beschrieben wird. Ferner ist anzumerken, dass der Abstandshalter 17 in manchen Ausführungsbeispielen nicht erforderlich ist, um ein Flachkabel 7 zu kontaktieren, welches eine geringere Anzahl von Adern aufweist, als ein Flachkabel mit einer maximalen Anzahl von Adern, für welche das jeweilige Verbindungssystem ausgelegt ist. In diesem Fall kann das weniger breite Flachkabel beispielsweise an einer Seite des Kabels in Kontakt mit dem Gehäuse 1 gebracht werden und dort gehalten werden, während die jeweiligen Dornen in die Adern des Flachkabels 7 eingeführt werden. Figur 6 zeigt in der linken Spalte Aufsichten unterschiedlicher Abstandshalter 17. Hierbei werden dieselben Abstandshalter 17 in Aufsicht dargestellt wie in Fig. 4, mittlere Spalte (jedoch in anderer Reihenfolge).

Fig. 6 (a) zeigt den "seitlichen" Abstandshalter 17 der Kabeltypen 3G4 und 3G6 in Aufsicht, wie in Fig. 4, mittlere Spalte, oben im Querschnitt dargestellt. Fig. 6 (b) zeigt den "unteren" Abstandshalter 17 des Kabeltyps 5G2,5 in Aufsicht, wie in Fig. 4, mittlere Spalte, unten im Querschnitt dargestellt. Fig. 6 (c) zeigt den "seitlichen und unteren" bzw. L-förmigen Abstandshalter 17 des Kabeltyps 3G2,5 in Aufsicht, wie in Fig. 4, mittlere Spalte, Mitte im Querschnitt dargestellt. Die Bereiche 21, welche in Fig. 6 neben dem jeweiligen Abstandshalter 17 dargestellt sind (aus Gründen der Anschaulichkeit nur in Fig. 6 (a) mit Bezugszeichen versehen), sind Teile einer inneren Oberfläche der Basisplatte 5, auf welche der jeweilige Abstandshalter 17 befestigt ist. Wie in Fig. 6, linke Spalte dargestellt, können sich die Abstandshalter 17 über eine gesamte Länge der Basisplatte 5 entlang der ersten Richtung erstrecken.

Fig. 6, rechte Spalte zeigt in den Abschnitten (d) und (e) unterschiedliche beispielhafte Befestigungsmittel 23 zum Befestigen des jeweiligen Abstandshalters 17 an dem Gehäuse 1. In Abschnitt (d) ist gezeigt, dass als Befestigungsmittel 23 Schrauben vorgesehen sein können. Hierbei weist beispielsweise der Abstandshalter 17 passende Löcher zum Durchführen der Schrauben auf und das Gehäuse 1 weist in der Basisplatte 5 zugehörige Gewindelöcher zum Eindrehen der Schrauben auf. Alternativ können die Schrauben jedoch auch von unten eingedreht werden, wobei im Abstandshalter 17 ein Loch mit Gewinde vorgesehen ist.

Abschnitt (e) der Fig. 6 zeigt, dass als Befestigungsmittel 23 ein Befestigungsclip verwendet werden kann. Dieser ist im dargestellten Beispiel einstückig mit dem Abstandshalter 17 verbunden und wird durch ein zugehöriges Loch in der Basisplatte 5 des Gehäuses 1 eingedrückt und verrastet dort.

Auf die in den Abschnitten (d) und (e) dargestellte Weise kann der jeweilige für einen bestimmten Kabeltyp passende Abstandshalter 17 einfach und schnell mit dem Gehäuse 1 des Verbindungssystems verbunden werden bzw. darin eingesetzt werden. Anschließend kann das Verbindungssystem beispielsweise durch Schrauben oder Schnappverschluss mit dem jeweiligen Flachkabel verbunden werden.

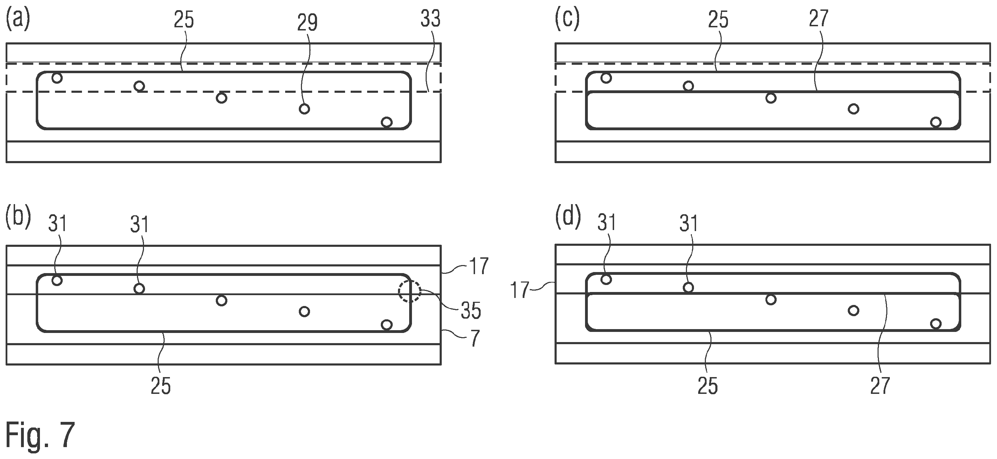

Figur 7 zeigt Aufsichten unterschiedlicher Flachkabel 7 und unterschiedlicher Abstandshalter 17 und unterschiedlicher Arten von Dichtung 25 für diese Elemente in Aufsicht. Die Abschnitte (a) und (b) zeigen eine erste beispielhafte Dichtung 25 mit ringförmigem Dichtungsteil und die Abschnitte (c) und (d) zeigen eine zweite beispielhafte Dichtung 25 mit ringförmigem Dichtungsteil und mit zusätzlichem Dichtungsteil 27, welcher sich entlang einer Kontaktfläche zwischen dem Flachkabel 7 und dem Abstandshalter 17 erstreckt.

Die Abschnitte (a) und (c) zeigen hierbei eine Situation, in der ein Flachkabel des Typs 5G4 oder 5G6 vorgesehen ist und somit kein Abstandshalter im Gehäuse 1 angeordnet ist. Die Abschnitte (b) und (d) zeigen jeweils eine Situation, in der ein Flachkabel des Typs 3G4 oder 3G6 vorgesehen ist und somit ein seitlicher Abstandshalter 17 eingesetzt ist, wie in Fig. 6 (a) und Fig. 4, mittlere Spalte, oben dargestellt ist. In den Abschnitten (a) und (c) ist die Position des seitlichen Abstandshalters 17 durch eine gestrichelte Linie 33 gekennzeichnet.

Die Kreise 29 kennzeichnen die Positionen der Dornen. Wie aus Fig. 7 ersichtlich ist, sind diese Positionen der Dornen sowohl entlang der ersten Richtung (der Ausbreitungsrichtung des Flachkabels 7) als auch entlang der Breitenrichtung des Flachkabels 7 zueinander versetzt. Es ist für jede möglicherweise vorhandene Ader des Flachkabels 7 ein Dorn 19 bzw. zumindest eine Aufnahme 11 für einen Dorn 19 vorgesehen. Für den Fall eines seitlichen Abstandshalters 17 (siehe Abschnitte (b) und (c)) können in diesem Abstandshalter 17 an den Positionen der Dornen jeweils Aussparungen 31 (z. B. in Form von Löchern oder Sacklöchern) vorgesehen sein, welche eine Aufnahme des jeweiligen Dorns 19 ermöglichen und somit verhindern, dass der jeweilige Dorn 19 in den Abstandshalter 17 eingestochen wird.

Die in den Abschnitten (a) und (b) gezeigte Dichtung 25 ist ringförmig und besteht somit aus einem ringförmigen Dichtungsteil. Die Dichtung 25 ist oberhalb des Flachkabels 7 bzw. oberhalb des Flachkabels 7 und des Abstandshalters 17 angeordnet und dient beispielsweise der Vermeidung des Eindringens von Feuchtigkeit in einen inneren Bereich des ringförmigen Dichtungsteils und somit in einen Bereich, in dem die Dornen 19 in die Leiter des Flachkabels 7 eingestochen sind. Die Dichtung 25 kann somit fest verbunden sein mit dem Gehäuse 1 und insbesondere mit einer äußeren Unterseite der Hauptbox 3 des Gehäuses 1. Beim Verbinden des Gehäuses 1 mit dem Flachkabel 7 kann sich somit die Dichtung 25 auf das Flachkabel 7 und ggf. auf den Abstandshalter 17 drücken und für eine entsprechende Abdichtung sorgen.

In manchen Anwendungsfällen kann die Dichtung 25 der Abschnitte (a) und (b) nicht ausreichend sein, da insbesondere über einen Bereich 35 zwischen Flachkabel 7 und Abstandshalter 17 in manchen Situationen durch den dort herrschenden Spalt weiterhin Flüssigkeit eindringen kann.

Somit kann es vorteilhaft sein, einen zusätzlichen Dichtungsteil 27 bereitzustellen, wie in Fig. 7 (c) und (d) dargestellt, welcher entlang einer Grenzfläche zwischen dem Flachkabel 7 und dem Abstandshalter 17 verläuft. Der zusätzliche Dichtungsteil 27 verläuft von einem Punkt des ringförmigen Dichtungsteils entlang der ersten Richtung zu einem gegenüberliegenden Punkt des ringförmigen Dichtungsteils. Der zusätzliche Dichtungsteil 17 sorgt somit für eine Abdichtung eines Spaltraums zwischen Flachkabel 7, Abstandshalter 17 und dem Gehäuse 1.

Die in der Figur 7 dargestellten Dichtungen 25 sind optional und beispielsweise nur für eine bestimmte Schutzklasse erforderlich.

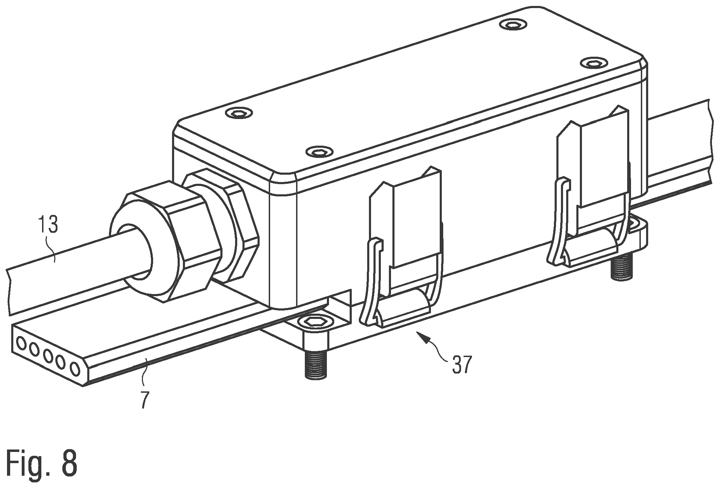

Figur 8 zeigt eine perspektivische Außenansicht eines Verbindungssystems gemäß der vorliegenden Offenbarung mit Schnappverschluss 37 (auch: Schnellverschluss). Der Schnappverschluss 37 stellt eine Möglichkeit der Verbindung der Hauptbox 3 mit der Basisplatte 5 des Gehäuses 1 dar. Hierbei wird das Flachkabel 7 zwischen Hauptbox 3 und Basisplatte 5 eingeklemmt und somit mit dem Gehäuse 1 verbunden. Beispielsweise können Schnappverschlüsse 37 (z. B. zwei Schnappverschlüsse) an einer Seite des Gehäuses 1 angeordnet sein und an einer anderen, gegenüberliegenden Seite des Gehäuses 1 sind Scharniere zur verschwenkbaren Befestigung der Basisplatte 5 an der Hauptbox 3 vorgesehen.

Alternativ zu dem in Fig. 8 dargestellten Schnappverschluss 37 kann die Seite des Gehäuses 1, an der der Schnappverschluss 37 vorgesehen ist, mit Schrauben geschlossen werden, wobei beispielsweise die Basisplatte 5 an die Hauptbox 3 geschraubt wird oder umgekehrt. Alternativ hierzu können die Scharniere auch weggelassen werden und an beiden Seiten des Gehäuses 1 (somit an beiden Seiten des Flachkabels 7) können Schrauben zum Verschrauben der Hauptbox 3 mit der Basisplatte 5 vorgesehen sein.

## Patentansprüche

1. System zum Verbinden eines Verbindungssystems mit einem ersten Flachkabel (7) mit mehreren Adern und/oder mit einem zweiten Flachkabel (7) mit mehreren Adern, wobei das System umfasst:
(a) das erste Flachkabel (7) umfassend eine erste Anzahl von entlang einer Breitenrichtung des ersten Flachkabels (7) angeordneten Adern mit jeweils einem ersten Leiterquerschnitt, wobei sämtliche Abstände (x) zwischen Mittelachsen jeweils benachbarter Adern identisch sind;
(b) das zweite Flachkabel (7) umfassend eine zweite Anzahl von entlang einer Breitenrichtung des zweiten Flachkabels (7) angeordneten Adern mit jeweils einem zweiten Leiterquerschnitt, wobei sämtliche Abstände (x) zwischen Mittelachsen jeweils benachbarter Adern identisch sind und den Abständen (x) des ersten Flachkabels (7) entsprechen, und wobei sich der erste Leiterquerschnitt und der zweite Leiterquerschnitt voneinander unterscheiden und/oder wobei sich die erste Anzahl von Adern und die zweite Anzahl von Adern voneinander unterscheiden;
(c) das Verbindungssystem, umfassend
- ein Gehäuse (1) zum Aufnehmen des zu verbindenden Flachkabels (7), sodass das zu verbindende Flachkabel (7) entlang einer ersten Richtung durch das Gehäuse (1) verläuft;
- mindestens drei Aufnahmen (11) für jeweils einen Dorn (19) zum Einstechen in jeweils eine der Adern des zu verbindenden Flachkabels (7),
wobei die mindestens drei Aufnahmen (11) so angeordnet sind, dass in einem aufgenommenen Zustand der Dorne (19) die Dorne (19) der mindestens drei Aufnahmen (11) bezüglich der zur ersten Richtung senkrechten Breitenrichtung des zu verbindenden Flachkabels (7) im gleichen Abstand (x) zueinander angeordnet sind, der dem Abstand (x) zwischen den Mittelachsen der Adern des ersten Flachkabels (7) und des zweiten Flachkabels (7) entspricht.

2. System nach Anspruch 1, wobei das Verbindungssystem mindestens fünf und insbesondere genau fünf Aufnahmen (11) aufweist, die so angeordnet sind, dass im aufgenommenen Zustand der Dorne (19) die Dorne (19) der mindestens fünf Aufnahmen (11) bezüglich der Breitenrichtung des zu verbindenden Flachkabels (7) im gleichen Abstand (x) zueinander angeordnet sind.

3. System nach Anspruch 1 oder 2, wobei das Verbindungssystem ferner mindestens einen Abstandshalter (17) zum Füllen eines Zwischenraums zwischen dem zu verbindenden Flachkabel (7) und dem Gehäuse (17) umfasst.

4. System nach Anspruch 3, wobei das Verbindungssystem ferner mindestens ein Befestigungsmittel (23) zum Befestigen des Abstandhalters (17) an dem Gehäuse (1) umfasst.

5. System nach Anspruch 4, wobei das mindestens eine Befestigungsmittel (23) eine Schraube umfasst und wobei im Abstandhalter (17) und im Gehäuse (1) jeweils mindestens ein Loch zum Eindrehen der Schraube vorgesehen ist.

6. System nach Anspruch 4 oder 5, wobei das mindestens eine Befestigungsmittel (23) einen Befestigungsclip umfasst,
wobei der Befestigungsclip am Abstandshalter (17) vorgesehen ist und dazu eingerichtet ist, in eine dazu vorgesehene Öffnung des Gehäuses (1) eingeführt zu werden und darin einzurasten oder
wobei der Befestigungsclip am Gehäuse (1) vorgesehen ist und dazu eingerichtet ist, in eine dazu vorgesehene Öffnung des Abstandshalters (17) eingeführt zu werden und darin einzurasten.

7. System nach einem der Ansprüche 3 bis 6, wobei der Abstandhalter (17) dazu eingerichtet ist, in einem eingesetzten Zustand einen Zwischenraum zu füllen, der sich entlang der Breitenrichtung des zu verbindenden Flachkabels (7) benachbart zum Flachkabel (7) befindet und/oder
wobei der Abstandhalter (17) dazu eingerichtet ist, in einem eingesetzten Zustand einen Zwischenraum zu füllen, der sich entlang einer Dickenrichtung des zu verbindenden Flachkabels (7) benachbart zum Flachkabel (7) befindet.

8. System nach einem der Ansprüche 3 bis 7, wobei der Abstandhalter (17) dazu eingerichtet ist, sich in einem eingesetzten Zustand in Breitenrichtung des zu verbindenden Flachkabels (7) mindestens über das gesamte Flachkabel (7) zu erstrecken und/oder wobei der Abstandhalter (17) dazu eingerichtet ist, sich in einem eingesetzten Zustand in Dickenrichtung des zu verbindenden Flachkabels (7) mindestens über das gesamte Flachkabel (7) zu erstrecken.

9. System nach einem der Ansprüche 3 bis 8, umfassend mehrere Abstandhalter (17) für unterschiedlich breite und/oder unterschiedlich dicke Flachkabel (7).

10. System nach einem der Ansprüche 3 bis 9, wobei der Abstandhalter (17) in einem eingesetzten Zustand an einer Position mindestens einer der Aufnahmen (11) eine Aussparung (31) umfasst.

11. System nach einem der Ansprüche 1 bis 10, wobei das Verbindungssystem ferner eine zwischen dem Gehäuse (1) und dem Flachkabel (7) angeordnete Dichtung (25) mit einem ringförmigen Dichtungsteil umfasst.

12. System nach Anspruch 11, wobei die Dichtung (25) zusätzlich zu dem ringförmigen Dichtungsteil einen Dichtungsteil (27) umfasst, welcher entlang einer Kontaktfläche zwischen dem Flachkabel (7) und dem Abstandhalter (17) verläuft.

13. System nach einem der Ansprüche 1 bis 12, wobei das Verbindungssystem den Dorn (19) umfasst.

14. Verbindungssystem zum Verbinden mit einem ersten Flachkabel (7) mit mehreren Adern und/oder mit einem zweiten Flachkabel (7) mit mehreren Adern, wobei das Verbindungssystem umfasst:
- ein Gehäuse (1) zum Aufnehmen des zu verbindenden Flachkabels (7), sodass das zu verbindende Flachkabel (7) entlang einer ersten Richtung durch das Gehäuse (1) verläuft;
- mindestens drei Aufnahmen (11) für jeweils einen Dorn (19) zum Einstechen in jeweils eine der Adern des zu verbindenden Flachkabels (7),
wobei die mindestens drei Aufnahmen (11) so angeordnet sind, dass in einem aufgenommenen Zustand der Dorne (19) die Dorne (19) der mindestens drei Aufnahmen (11) bezüglich der zur ersten Richtung senkrechten Breitenrichtung des zu verbindenden Flachkabels (7) im gleichen Abstand (x) zueinander angeordnet sind; und
- mindestens einen Abstandshalter (17) zum Füllen eines Zwischenraums zwischen dem zu verbindenden Flachkabel (7) und dem Gehäuse (1).

15. Verbindungssystem nach Anspruch 14, ferner aufweisend die Merkmale eines der Ansprüche 2 und 4 bis 13.
